Europäisches Patentamt

European Patent Office

Office européen des brevets

(11) Publication number: **0 466 035 A1**

# EUROPEAN PATENT APPLICATION

(21) Application number: **91111137.5**

(22) Date of filing: **04.07.91**

(51) Int. Cl.⁵: **E05F 11/44**

(30) Priority: **10.07.90 IT 6751790**

(43) Date of publication of application:
**15.01.92 Bulletin 92/03**

(84) Designated Contracting States:
**DE ES FR GB IT**

(71) Applicant: **ROLTRA-MORSE S.p.A.**
**Via Albenga, 9**
**I-10090 Cascine Vica-Rivoli(IT)**

(72) Inventor: **Pozzi, Giuseppe**
**Via Guido Reni 83**
**I-10136 Torino(IT)**

(74) Representative: **Jorio, Paolo et al**
**Studio Torta, Via Viotti, 9**
**I-10121 Torino(IT)**

(54) Window regulator, particularly for motor vehicles.

(57) A window regulator (1) wherein a first guide (4), defining the route of a sliding window (2), is engaged in sliding manner by a first slide (18) connected to the window (2) and moved along the first guide (4) by an actuating device (11)(42) having an actuating arm (10) turning about a first axis (9) lying substantially crosswise in relation to the first guide (4); a portion of the actuating arm (10) defining a second guide (16) extending along a second axis (12) lying substantially crosswise in relation to the first axis (9) and the first guide (4); and a second slide (17), supported on the first slide (18), being connected in sliding manner to the second guide (16).

Fig.1

EP 0 466 035 A1

The present invention relates to a window regulator, particularly for motor vehicles.

In particular, the present invention relates to a window regulator suitable for fitment inside the door of a motor vehicle for enabling troublefree, noisefree vertical control of a sliding window on the door.

According to the present invention, there is provided a window regulator comprising a first guide defining the route of a sliding window; a first slide connected in sliding manner to said first guide; actuating means connected to said first slide for moving the same along said first guide; and means for connecting said first slide to said window and moving said window along said first guide by virtue of said actuating means; characterised by the fact that said actuating means comprise a support fixed in relation to said first guide; an actuating arm mounted on said support so as to rotate in relation to the same about a first axis lying substantially crosswise in relation to said first guide, a portion of said arm defining a second guide extending along a second axis lying substantially crosswise in relation to said first axis and said first guide; and a second slide supported on said first slide and connected in sliding manner to said second guide.

A number of non-limiting embodiments of the present invention will be described by way of example with reference to the accompanying drawings, in which:

Fig.1 shows a front view of a preferred embodiment of the window regulator according to the present invention;

Fig.2 shows a top view of the Fig.1 regulator;

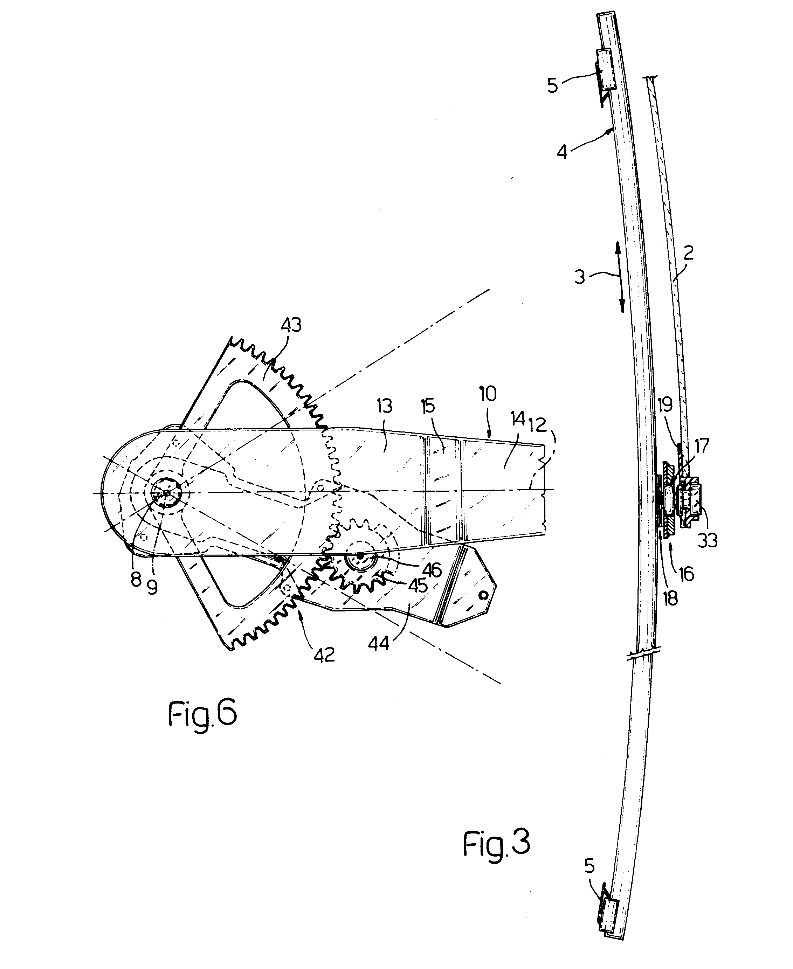

Fig.3 shows a side view of the Fig.1 regulator;

Fig.4 shows a larger-scale section of a detail in Fig.1;

Fig.5 shows a section along line V-V in Fig.4;

Fig.6 shows a variation of a detail in Fig.1.

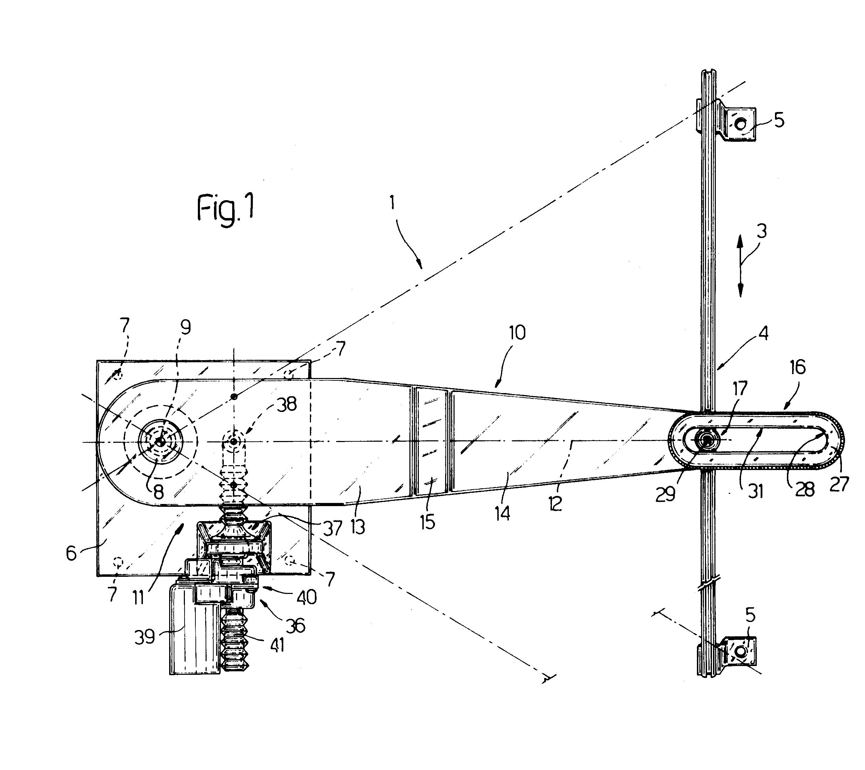

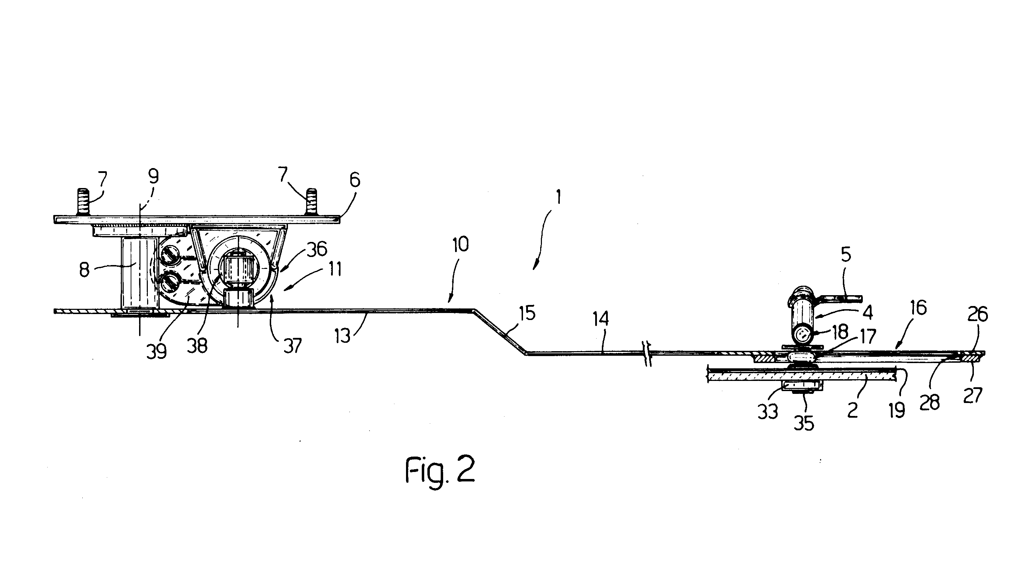

Number 1 in Fig.1 indicates a window regulator suitable for fitment inside a door (not shown) of a vehicle (not shown), particularly a motor vehicle, for regulating the position of a window 2 (Fig.2) sliding in the direction of arrow 3 along a guide 4 fitted inside the door by means of brackets 5.

Regulator 1 comprises a substantially square plate 6 located to one side of an intermediate portion of guide 4, and secured to the door by screws 7. Plate 6 is fitted with a pin 8 having an axis 9 extending perpendicular to plate 6 and to arrow 3, and the free end of which supports for rotation the actuating arm 10 of an actuating device indicated as a whole by 11.

Arm 10 consists of a relatively thin, elongated plate having a longitudinal axis 12, when projected on to a plane perpendicular to axis 9, and comprising two end portions 13 and 14 parallel to each other and to plate 6 and connected by an inclined intermediate portion 15 for rendering arm 10 highly flexible in the plane defined by axes 9 and 12.

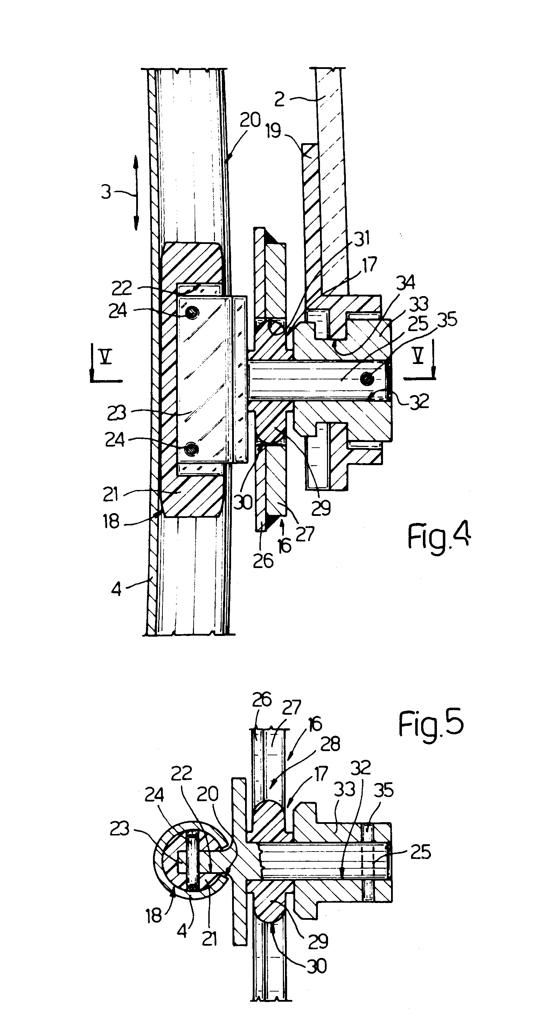

Arm 10 is connected to pin 8 by portion 13, and is fitted, on the free end of portion 14, with a guide 16 for a slide 17 sliding along guide 16 in the direction of axis 12 and, as shown in Fig.4, integral with both a slide 18 connected to guide 4, and a bracket 18 connected to the bottom edge of window 2.

As shown in Fig.s 3, 4 and 5, guide 16 extends in front of and substantially crosswise in relation to guide 4, which presents a curved axis of the same curvature as the door, and comprises a cylindrical channel fitted on the ends with brackets 5 and having a longitudinal opening 20 facing guide 16.

As shown in Fig.s 4 and 5, slide 18 comprises a cylindrical body 21 engaged in sliding manner inside the channel of guide 4, and having a longitudinal diametrical recess 22 engaged by a key 23 fitted inside cylindrical body 21 by means of a transverse pin 24. Key 23 projects outwards of cylindrical body 21 to engage opening 20 in sliding manner, and is fitted integral with a pin 25 extending radially outwards in relation to cylindrical body 21 and parallel to axis 9.

As shown in Fig.s 1, 4 and 5, guide 16 comprises an elongated plate defined by two superimposed plates 26 and 27, plate 26 being integral and coplanar with portion 14 of arm 10, and by an opening 28 extending along axis 12.

As shown particularly in Fig.s 4 and 5, slide 17 comprises a roller 29 housed inside opening 28 and mounted in idle manner on pin 25. Roller 29 presents a convex outer profile 30, the diametrically opposite points of which contact the flat longitudinal edges 31 of opening 28.

As shown in Fig.s 4 and 5, pin 25 extends beyond roller 29, and engages an axial through hole 32 in a cylindrical body 33 extending in rotary manner through a hole 34 (Fig.4) in bracket 19 and fitted on to pin 25 by a diametrical pin 35.

As shown in Fig.1, in addition to actuating arm 10, actuating device 11 also comprises an electromechanical linear actuator 36 located between plate 6 and portion 13 of actuating arm 10, and connected to plate 6 and portion 13 via respective spherical joints 37 and 38. Linear actuator 36 comprises an electric motor 39 and a recirculating-ball, screw-nut screw drive 40 in turn comprising a screw 41 connected to portion 13 of actuating arm 10 by spherical joint 38, and moved axially by motor 39 so as to turn actuating arm 10 about axis 9 and so move slide 18, bracket 19 and window 2 along guide 4 in the direction of arrow 3, and at the same time move slide 17 along opening 28 in guide 16. As the axis of guide 4 is curved and the rotation axis 9 of arm 10 fixed, displacement of slide 18 along guide 4 obviously results in arm 10 being subjected to both a twisting moment about axis 12 and a bending moment in the plane defined by axes 9 and 12.

Said twisting moment is absorbed by virtue of the connection between longitudinal edges 31 of opening 28 and roller 29, the convex outer profile 30 of which allows it to roll freely about axis 12 inside opening 28; while the bending moment is absorbed directly by arm 10 flexing in the plane defined by axes 9 and 12.

In the Fig.6 variation, actuating device 11 is replaced by an actuating device 42 comprising, in place of linear actuator 36, a sector gear 43 connected integral with arm 10 and mounted for rotation, with arm 10, on pin 8. Pin 8 is integral with an elongated plate 44 fitted to the vehicle door in place of plate 6, and located on the opposite side of sector gear 43 in relation to arm 10. In addition to sector gear 43, actuating device 42 also comprises a pinion 45 meshing with sector gear 43 and fitted to a shaft 46 supported by plate 44 and rotated by any type of activating device (not shown), e.g. a hand-operated crank (not shown) fitted to shaft 46.

## Claims

1. A window regulator (1) comprising a first guide (4) defining the route of a sliding window (2); a first slide (18) connected in sliding manner to said first guide (4); actuating means (11)(42) connected to said first slide (18) for moving the same along said first guide (4); and means (19, 25) for connecting said first slide (18) to said window (2) and moving said window (2) along said first guide (4) by virtue of said actuating means (11)(42); characterised by the fact that said actuating means (11)(42) comprise a support (6)(44) fixed in relation to said first guide (4); an actuating arm (10) mounted on said support (6)(44) so as to rotate in relation to the same about a first axis (9) lying substantially crosswise in relation to said first guide (4), a portion of said arm (10) defining a second guide (16) extending along a second axis (12) lying substantially crosswise in relation to said first axis (9) and said first guide (4); and a second slide (17) supported on said first slide (18) and connected in sliding manner to said second guide (16).

2. A window regulator as claimed in Claim 1, characterised by the fact that said second slide (17) is connected to said second guide (16) so as to slide along the same along said second axis (12), and to rotate in relation to said second guide (16) about said second axis (12).

3. A window regulator as claimed in Claim 2, characterised by the fact that said second guide (16) is defined by an opening (28) formed through a portion (26, 27) of said actuating arm (10) and having its axis parallel to said second axis (12); said second slide (17) comprising a roller (29) having a convex outer profile (30), mounted along said opening (28), and having its axis substantially parallel to said first axis (9).

4. A window regulator as claimed in any one of the foregoing Claims, characterised by the fact that said actuating arm (10) is flexible in the plane defined by said first and second axes (9, 12).

5. A window regulator as claimed in any one of the foregoing Claims, characterised by the fact that said first guide (4) comprises a cylindrical channel having a longitudinal opening (20); said first slide (18) comprising a cylindrical body (21) engaged in sliding manner inside said cylindrical channel, and key means (23) integral with said cylindrical body (21) and extending in sliding manner through said opening (20).

6. A window regulator as claimed in Claim 5, characterised by the fact that said first guide (4) presents a curved axis.

7. A window regulator as claimed in Claim 5 or 6, characterised by the fact that said second slide (17) is integral with said key means (23).

8. A window regulator as claimed in any one of the foregoing Claims, characterised by the fact that said actuating means (11) comprise a linear actuator (36) located between said support (6) and a portion (13) of said actuating arm (10) extending between said first axis (9) and said second guide (16).

9. A window regulator as claimed in Claim 8, characterised by the fact that said linear actuator (36) is connected to said support (6) and said actuating arm (10) via respective spherical joints (37, 38).

10. A window regulator as claimed in Claim 8 or 9, characterised by the fact that said linear actuator (36) is electromechanical.

11. A window regulator as claimed in Claim 10, characterised by the fact that said linear actuator (36) comprises a motor (39) and a recirculating-ball, screw-nut screw drive (40) in turn comprising a screw (41) connected to said portion (13) of said actuating arm (10) and moved axially by said motor (39) so as to rotate said actuating arm (10) about said first axis (9).

12. A window regulator as claimed in any one of the foregoing Claims from 1 to 7, characterised by the fact that said actuating means (42) comprise a sector gear (43) and a pinion (45) meshing with said sector gear (43) and mounted for rotation on said support (44); said sector gear (43) rotating with said actuating arm (10) about said first axis (9).

Fig.1

EP 0 466 035 A1

Fig. 2

Fig.6

Fig.3

Fig.4

Fig.5

European
Patent Office

**EUROPEAN SEARCH
REPORT**

Application Number

**EP 91 11 1137**

## DOCUMENTS CONSIDERED TO BE RELEVANT

| Category | Citation of document with indication, where appropriate, of relevant passages | | Relevant to claim | CLASSIFICATION OF THE APPLICATION (Int. Cl.5) |
|---|---|---|---|---|
| X | DE-A-3 330 249 | (BROSE FAHRZEUGTEILE) <br> – – – | 1,5,7,12 | E 05 F 11/44 |
| Y | DE-A-3 330 249 | (* page 14, line 24 - page 16, line 22; figures 2,7,8 *) | 6 | |
| A | | | 2 | |
| | | – – – | | |
| X | FR-A-2 012 726 | (DAIMLER - BENZ) <br> – – – | 1,2 | |
| Y | FR-A-2 012 726 | (* page 2, line 12 - line 19 *) <br> – – – | 3,4,6,8,10 | |
| A | FR-A-2 012 726 | (* page 2, line 28 - line 32; figure 1 *) <br> – – – | 5,12 | |
| Y | FR-A-2 455 667 | (PAUMELLERIE ELECTRIQUE) <br> – – – | 3,4,8,10 | |
| A | FR-A-2 455 667 | (* page 4, line 1 - line 22 * ) <br> * page 5, line 21 - line 23; figures 1,2 * * <br> – – – | 11 | |
| A | US-A-2 547 851 | (BRUNDAGE) <br> – – – | 8,9,10 | |
| A | FR-A-2 359 954 | (RIV - SKF OFFICINE DI VILLAR PEROSA) <br> * page 3, line 27 - page 4, line 10 * * * page 4, line 28 - page 5, line 31; figures 1,2,4 * * <br> – – – – – | 5,11 | **TECHNICAL FIELDS SEARCHED (Int. Cl.5)** <br><br> E 05 F |

The present search report has been drawn up for all claims

| Place of search | Date of completion of search | Examiner |
|---|---|---|
| The Hague | 16 October 91 | GUILLAUME G.E.P. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document